# DEMANDE DE BREVET EUROPEEN

(11) **EP 4 782 893 A1**
(43) Date de publication de la demande: **29.07.2026**
(21) Numéro de dépôt: 26151468.1
(22) Date de dépôt: 13.01.2026
(51) Int. Cl.: G02B 6/132

(54) **PROCEDE DE FABRICATION D'UN GUIDE D'ONDES**

(30) Priorité: 22.01.2025 FR 2500620
(71) Demandeur: Commissariat à l'Energie Atomique et aux Energies Alternatives, 75015 Paris (FR)
(72) Inventeur: DEY, Benjamin, 38054 Grenoble cedex 09 (FR); COUDURIER, Nicolas, 38054 Grenoble cedex 09 (FR)
(74) Mandataire: INNOV-GROUP

(57) **Abrégé**

Ce procédé comporte les étapes :
a) utiliser un empilement comprenant successivement :
- un substrat (1), réalisé en silicium ;
- une couche (2) de dioxyde de silicium, formant une gaine inférieure du guide d'ondes ;

b) déposer une couche (3) de nitrure de silicium sur la couche (2) de dioxyde de silicium par un dépôt physique en phase vapeur ;
c) graver partiellement la couche (3) de nitrure de silicium de manière à former un cœur (C) du guide d'ondes ;
d) déposer une couche (4) de dioxyde de silicium autour du cœur (C) formé lors de l'étape c) de manière à former une gaine supérieure du guide d'ondes ;
procédé dans lequel la couche (3) de nitrure de silicium est soumise à un traitement (T) de surface par un plasma adapté pour obtenir une rugosité de surface inférieure à un seuil prédéterminé.

## Description

### Domaine technique

L'invention se rapporte au domaine technique de la photonique sur silicium, plus précisément de la fabrication d'un guide d'ondes enterré.

L'invention trouve notamment son application dans la fabrication de circuits intégrés photoniques pour les télécommunications optiques, les capteurs photoniques pour la détection biomédicale et chimique.

### État de l'art

Un procédé de fabrication d'un guide d'ondes connu de l'état de la technique comporte les étapes :
A) utiliser un empilement comprenant successivement :
   - un substrat, réalisé en silicium ;
   - une couche de dioxyde de silicium, formant une gaine inférieure du guide d'ondes ;
B) déposer une couche de nitrure de silicium sur la couche de dioxyde de silicium ;
C) graver partiellement la couche de nitrure de silicium de manière à former un cœur du guide d'ondes ;
D) déposer une couche de dioxyde de silicium autour du cœur formé lors de l'étape C) de manière à former une gaine supérieure du guide d'ondes.

Le nitrure de silicium Si₃N₄ est choisi comme matériau du cœur du guide d'ondes pour ses propriétés optiques intéressantes. En effet, le nitrure de silicium est transparent sur une large plage de longueurs d'onde, en particulier le domaine visible utilisé pour la détection et l'infrarouge proche [0,78 µm - 3 µm] utilisé pour les télécommunications optiques (e.g. 1550 nm). De plus, le nitrure de silicium présente des pertes optiques très faibles, ce qui permet d'obtenir une transmission à longue distance sans dégradation importante du signal.

Le dioxyde de silicium SiO₂ est choisi comme matériau de la gaine du guide d'ondes entourant le cœur. En effet, le dioxyde de silicium possède un indice de réfraction nettement plus faible que celui du nitrure de silicium, ce qui autorise un excellent confinement pour la propagation de la lumière au sein du cœur.

Par ailleurs, le nitrure de silicium et le dioxyde de silicium sont des matériaux compatibles avec la filière CMOS (« *Complementary Metal Oxide Semiconductor*» en langue anglaise), condition nécessaire pour fabriquer des circuits intégrés photoniques.

Lorsque l'étape B) est exécutée par un dépôt chimique en phase vapeur assisté par plasma (PECVD pour « *Plasma Enhanced Chemical Vapor Deposition* »), le dépôt PECVD introduit des espèces hydrogénées en grande quantité. En effet, les gaz précurseurs sont généralement le silane SiH₄, le diazote N₂, le dihydrogène H₂ et l'ammoniac NH₃ pour obtenir du nitrure de silicium Si₃N₄. Or, la présence d'atomes d'hydrogène en grande quantité est fortement préjudiciable en termes de performances optiques.

Il est connu de l'état de la technique d'exécuter l'étape B) par un dépôt physique en phase vapeur (PVD pour « *Physical Vapor Deposition »* en langue anglaise) afin de s'affranchir potentiellement de gaz précurseurs hydrogénés. Le dépôt PVD de la couche de nitrure de silicium, très rugueux, est suivi d'une étape de polissage mécano-chimique (CMP pour *« Chemical Mechanical Polishing »* en langue anglaise) avant l'exécution de l'étape C).

### Exposé de l'invention

L'invention vise à remédier en tout ou partie aux inconvénients précités. A cet effet, l'invention a pour objet un procédé de fabrication d'un guide d'ondes, comportant les étapes :
a) utiliser un empilement comprenant successivement :
   - un substrat , réalisé en silicium ;
   - une couche de dioxyde de silicium, formant une gaine inférieure du guide d'ondes ;
b) déposer une couche de nitrure de silicium sur la couche de dioxyde de silicium par un dépôt physique en phase vapeur ;
c) graver partiellement la couche de nitrure de silicium de manière à former un cœur du guide d'ondes ;
d) déposer une couche de dioxyde de silicium autour du cœur formé lors de l'étape c) de manière à former une gaine supérieure du guide d'ondes ;
procédé dans lequel la couche de nitrure de silicium est soumise à un traitement de surface par un plasma adapté pour obtenir une rugosité de surface inférieure à un seuil prédéterminé.

Ainsi, un tel procédé selon l'invention permet de s'affranchir de la présence massive d'espèces hydrogénées grâce à l'étape b) qui n'implique pas de gaz précurseurs hydrogénés.

De plus, le traitement de surface par plasma appliqué dans le procédé selon l'invention permet à la fois :
(i) de réduire la rugosité de surface de la couche de nitrure de silicium
(ii) d'arracher des atomes d'azote en surface de la couche de nitrure de silicium, ce qui limite la création ultérieure de liaisons N-H lorsque le guide d'ondes est remis à l'air.

Par ailleurs, le traitement de surface par plasma est court (quelques dizaines de secondes) et moins complexe à mettre en œuvre qu'un polissage mécano-chimique.

Le procédé selon l'invention peut comporter une ou plusieurs des caractéristiques suivantes.

Selon une caractéristique de l'invention, le seuil prédéterminé de la rugosité de surface est défini à 0,5 nm RMS.

Ainsi, un avantage procuré est de limiter fortement les pertes optiques et améliorer la qualité de la transmission de la lumière.

Selon une caractéristique de l'invention, le plasma est obtenu à partir d'un gaz choisi parmi l'argon, l'hélium, le diazote, le dioxygène.

On pourra privilégier l'argon et l'hélium qui sont des gaz inertes et qui sont peu dommageables pour la surface de la couche de nitrure de silicium.

Selon une caractéristique de l'invention, le plasma est appliqué selon une densité de puissance surfacique comprise entre 850 W.m⁻² et 2650 W.m⁻².

Ainsi, un avantage procuré est de pouvoir arracher des atomes d'azote en surface de la couche de nitrure de silicium sans la graver significativement, c'est-à-dire en gravant une épaisseur inférieure à 10 nm (préférentiellement inférieure à 5 nm).

Selon une caractéristique de l'invention, le plasma est obtenu à partir d'un gaz soumis à une pression comprise entre 0,15 mTorr et 4,6 mTorr.

Ainsi, un avantage procuré est d'obtenir une action physique douce et précise sur la surface de la couche de nitrure de silicium afin d'obtenir la rugosité de surface souhaitée.

Selon une caractéristique de l'invention, le traitement de surface est appliqué après l'étape b) et avant l'étape c).

Ainsi, dans la mesure où la gravure de l'étape c) peut nécessiter un masque de photolithographie, il peut être avantageux d'appliquer le traitement de surface par plasma avant l'étape c) afin de favoriser ultérieurement le retrait de la résine (« *stripping »* en langue anglaise).

Selon une caractéristique de l'invention, le traitement de surface est appliqué après l'étape c) et avant l'étape d).

Ainsi, dans la mesure où la gravure de l'étape c) est susceptible d'engendrer des irrégularités de surface, il peut être avantageux d'appliquer le traitement de surface par plasma après l'étape c) afin de conserver une faible rugosité de surface de la couche de nitrure de silicium.

Selon une caractéristique de l'invention, l'étape b) est exécutée par une pulvérisation cathodique d'une cible de silicium dans un plasma réactif comportant de l'argon et du diazote, le plasma réactif étant dépourvu d'atomes d'hydrogène.

Ainsi, un avantage procuré est de réduire fortement la présence d'espèces hydrogénées pour la formation de la couche de nitrure de silicium par rapport à l'état de la technique.

Selon une caractéristique de l'invention, l'étape c) est exécutée par photolithographie.

Selon une caractéristique de l'invention, l'étape d) est exécutée par un dépôt chimique en phase vapeur sous pression sub-atmosphérique.

Ainsi, un avantage procuré est d'obtenir un haut degré de conformité de dépôt.

### Définitions

Par « substrat », on entend un support physique autoporté. Un substrat peut être une « tranche » (également dénommée « plaquette », *« wafer* » en langue anglaise) qui se présente généralement sous la forme d'un disque issu d'une découpe dans un lingot d'un matériau cristallin, en l'espèce le silicium.

Par « comprenant successivement », on entend que les éléments de l'empilement sont disposés les uns sur les autres selon un ordre défini de bas en haut dans des conditions normales d'utilisation, c'est-à-dire suivant la normale à la surface de réception du substrat.

Par « seuil prédéterminé », on entend que le seuil est déterminé préalablement à la mise en œuvre d'un procédé selon l'invention.

Par « RMS », on entend la valeur quadratique moyenne de la rugosité de surface. RMS est l'acronyme pour « *Root Mean Square »* en langue anglaise.

Par « mTorr », on entend un millième de torr. Un millième de torr, exprimé dans le Système International d'unités, correspond à environ 0,1333 Pa (Pascal).

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 est un schéma synoptique d'un premier mode de mise en œuvre d'un procédé selon l'invention, illustrant un traitement de surface par plasma de la couche de nitrure de silicium exécuté entre les étapes b) et c).
Figure 2 est un schéma synoptique d'un deuxième mode de mise en œuvre d'un procédé selon l'invention, illustrant un traitement de surface par plasma de la couche de nitrure de silicium exécuté entre les étapes c) et d).
Figure 3 est une vue schématique de face d'une chambre de plasma à couplage inductif pouvant être utilisée pour la mise en œuvre d'un procédé selon l'invention.

Il est à noter que les dessins décrits ci-avant sont schématiques, et ne sont pas nécessairement à l'échelle par souci de lisibilité et pour en simplifier leur compréhension. Les coupes sont effectuées selon la normale à la surface de réception du substrat.

### Exposé détaillé des modes de réalisation

Les éléments identiques ou assurant la même fonction porteront les mêmes références pour les différents modes de réalisation, par souci de simplification.

Un objet de l'invention est un procédé de fabrication d'un guide d'ondes, comportant les étapes :
a) utiliser un empilement comprenant successivement :
   - un substrat 1, réalisé en silicium ;
   - une couche 2 de dioxyde de silicium, formant une gaine inférieure du guide d'ondes ;
b) déposer une couche 3 de nitrure de silicium sur la couche 2 de dioxyde de silicium par un dépôt physique en phase vapeur ;
c) graver partiellement la couche 3 de nitrure de silicium de manière à former un cœur C du guide d'ondes ;
d) déposer une couche 4 de dioxyde de silicium autour du cœur C formé lors de l'étape c) de manière à former une gaine supérieure du guide d'ondes ;
procédé dans lequel la couche 3 de nitrure de silicium est soumise à un traitement T de surface par un plasma P adapté pour obtenir une rugosité de surface inférieure à un seuil prédéterminé.

### Etape a)

L'étape a) consiste à utiliser un empilement comprenant successivement :
- un substrat 1, réalisé en silicium ;
- une couche 2 de dioxyde de silicium, formant une gaine inférieure du guide d'ondes.

Le substrat 1 est de préférence un substrat massif (« *bulk substrate »* en langue anglaise). A titre d'exemple non limitatif, le substrat 1 peut présenter une épaisseur de 775 µm.

La couche 2 de dioxyde de silicium peut être formée sur le substrat 1 par une oxydation thermique. Cette technique est connue de l'homme du métier. A titre d'exemple non limitatif, la couche 2 de dioxyde de silicium peut présenter une épaisseur de 2 µm.

### Etape b)

L'étape b) consiste à déposer une couche 3 de nitrure de silicium sur la couche 2 de dioxyde de silicium par un dépôt physique en phase vapeur.

Avantageusement, l'étape b) est exécutée par une pulvérisation cathodique d'une cible de silicium dans un plasma réactif comportant de l'argon et du diazote, le plasma réactif étant dépourvu d'atomes d'hydrogène. A titre d'exemple non limitatif, le ratio diazote/argon peut être de l'ordre de 0,8.

A titre d'exemple non limitatif, la couche 3 de nitrure de silicium peut présenter une épaisseur comprise entre 300 nm et 800 nm.

### Etape c)

L'étape c) consiste à graver partiellement la couche 3 de nitrure de silicium de manière à former un cœur C du guide d'ondes.

Avantageusement, l'étape c) est exécutée par photolithographie. Les techniques associées à la photolithographie sont connues de l'homme du métier.

### Etape d)

L'étape d) consiste à déposer une couche 4 de dioxyde de silicium autour du cœur C formé lors de l'étape c) de manière à former une gaine supérieure du guide d'ondes.

Avantageusement, l'étape d) est exécutée par un dépôt chimique en phase vapeur sous pression sub-atmosphérique. Les gaz précurseurs peuvent être le silane SiH₄ et le protoxyde d'azote N₂O avec un ratio SiH₄/N₂O de l'ordre de 10. A titre d'exemple non limitatif, la pression peut être de l'ordre de 105 Pa.

### Traitement de surface par un plasma

Selon l'invention, la couche 3 de nitrure de silicium est soumise à un traitement T de surface par un plasma P adapté pour obtenir une rugosité de surface inférieure à un seuil prédéterminé.

Avantageusement, le seuil prédéterminé de la rugosité de surface est défini à 0,5 nm RMS.

Avantageusement, le plasma P est obtenu à partir d'un gaz choisi parmi l'argon, l'hélium, le diazote, le dioxygène. A titre d'exemple non limitatif, le débit d'argon peut être de l'ordre de 7 SCCM *(« Standard Cubic Centimeters per Minute »* en langue anglaise) et le débit d'hélium peut être de l'ordre de 150 SCCM.

Avantageusement, le plasma P est appliqué selon une densité de puissance surfacique comprise entre 850 W.m⁻² et 2650 W.m⁻².

Avantageusement, le plasma P est obtenu à partir d'un gaz soumis à une pression comprise entre 0,15 mTorr et 4,6 mTorr.

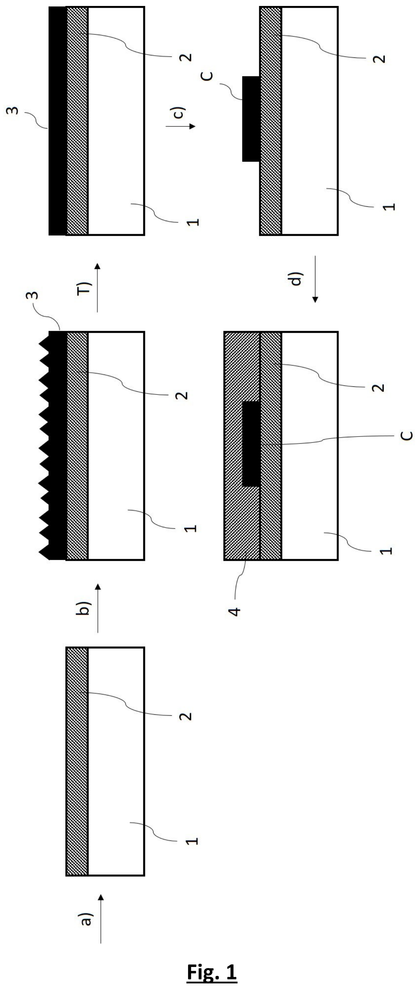

Selon un premier mode de réalisation, le traitement T de surface est appliqué après l'étape b) et avant l'étape c), voir figure 1. Ainsi, lorsque l'étape c) nécessite un masque de photolithographie, il peut être avantageux d'appliquer le traitement T de surface par plasma P avant l'étape c) afin de favoriser ultérieurement le retrait de la résine *(« stripping »* en langue anglaise).

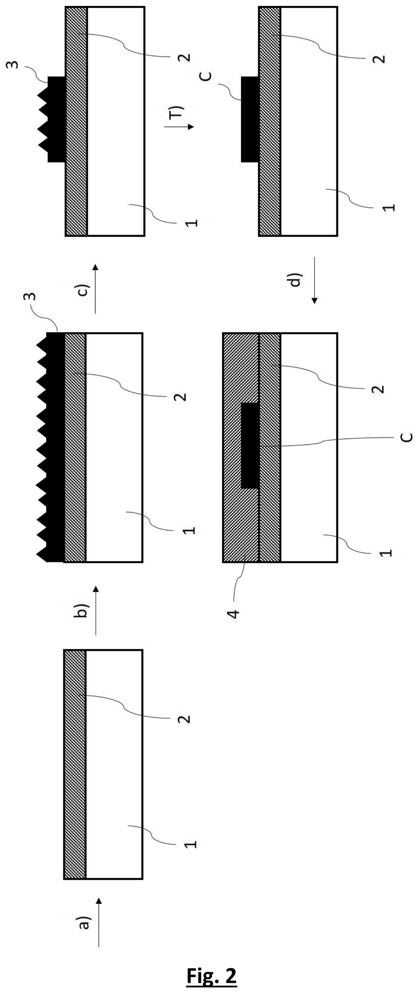

Selon un deuxième mode de réalisation, le traitement T de surface est appliqué après l'étape c) et avant l'étape d), voir figure 2. La gravure de l'étape c) étant susceptible d'engendrer des irrégularités de surface, il peut être avantageux d'appliquer le traitement T de surface par plasma P après l'étape c) afin de conserver une faible rugosité de surface de la couche 3 de nitrure de silicium avant l'exécution de l'étape d).

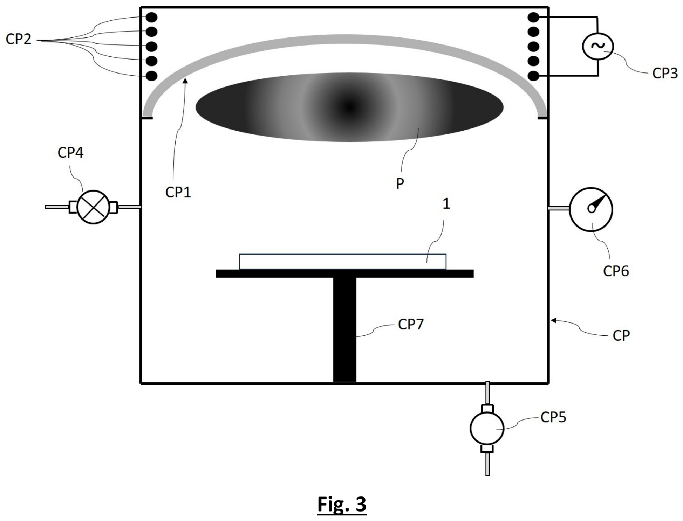

Le traitement T de surface par plasma P peut être exécuté dans une chambre CP de plasma à couplage inductif, voir figure 3. La chambre CP comporte une cloche à vide CP1 séparant l'intérieur de la chambre CP d'une bobine CP2 d'induction alimentée par un générateur CP3 radiofréquence. La cloche à vide CP1 est réalisée dans un matériau autorisant la transmission du champ magnétique généré par la bobine CP2 à l'intérieur de la chambre CP. Le champ magnétique transmis induit un champ électrique au sein du gaz contenu dans la chambre CP de manière à obtenir un plasma P. La chambre CP est munie de moyens d'admission CP4 de gaz en son sein, et d'une pompe CP5 à vide. La pression à l'intérieur de la chambre CP peut être mesurée à l'aide d'une jauge CP6, par exemple une jauge de Pirani. La chambre CP est munie d'un support CP7 pour le substrat 1. Le support CP7 peut être chauffé afin de chauffer le substrat 1.

### Couche de protection

Le procédé selon l'invention peut comporter une étape additionnelle consistant à former une couche de protection (non illustrée) sur la couche 4 de dioxyde de silicium déposée lors de l'étape d).

A titre d'exemple non limitatif, la couche de protection peut être réalisée en alumine Al₂O₃ et peut présenter une épaisseur de 5 nm.

L'invention ne se limite pas aux modes de réalisation exposés. L'homme du métier est mis à même de considérer leurs combinaisons techniquement opérantes, et de leur substituer des équivalents.

## Revendications

1. Procédé de fabrication d'un guide d'ondes, comportant les étapes :
a) utiliser un empilement comprenant successivement :
- un substrat (1), réalisé en silicium ;
- une couche (2) de dioxyde de silicium, formant une gaine inférieure du guide d'ondes ;
b) déposer une couche (3) de nitrure de silicium sur la couche (2) de dioxyde de silicium par un dépôt physique en phase vapeur ;
c) graver partiellement la couche (3) de nitrure de silicium de manière à former un cœur (C) du guide d'ondes ;
d) déposer une couche (4) de dioxyde de silicium autour du cœur (C) formé lors de l'étape c) de manière à former une gaine supérieure du guide d'ondes ;
procédé dans lequel la couche (3) de nitrure de silicium est soumise à un traitement (T) de surface par un plasma (P) adapté pour obtenir une rugosité de surface inférieure à un seuil prédéterminé, le traitement (T) de surface étant appliqué après l'étape b) et avant l'étape c).

2. Procédé selon la revendication 1, dans lequel le seuil prédéterminé de la rugosité de surface est défini à 0,5 nm RMS.

3. Procédé selon la revendication 1 ou 2, dans lequel le plasma (P) est obtenu à partir d'un gaz choisi parmi l'argon, l'hélium, le diazote, le dioxygène.

4. Procédé selon l'une des revendications 1 à 3, dans lequel le plasma (P) est appliqué selon une densité de puissance surfacique comprise entre 850 W.m⁻² et 2650 W.m⁻².

5. Procédé selon l'une des revendications 1 à 4, dans lequel le plasma (P) est obtenu à partir d'un gaz soumis à une pression comprise entre 0,15 mTorr et 4,6 mTorr.

6. Procédé selon l'une des revendications 1 à 5, dans lequel l'étape b) est exécutée par une pulvérisation cathodique d'une cible de silicium dans un plasma réactif comportant de l'argon et du diazote, le plasma réactif étant dépourvu d'atomes d'hydrogène.

7. Procédé selon l'une des revendications 1 à 6, dans lequel l'étape c) est exécutée par photolithographie.

8. Procédé selon l'une des revendications 1 à 7, dans lequel l'étape d) est exécutée par un dépôt chimique en phase vapeur sous pression sub-atmosphérique.
